# EUROPÄISCHE PATENTSCHRIFT

(11) **EP 1 881 252 B1**
(45) Veröffentlichungstag und Bekanntmachung des Hinweises auf die Patenterteilung: **11.09.2013**
(21) Anmeldenummer: 07033507.0
(22) Anmeldetag: 11.07.2007
(51) Int. Cl.: F16L 37/14, F16L 37/12

(54) **Sicherungsvorrichtung für ein Sicherungselement**
Safety device for a safety element
Dispositif de sécurisation pour un élément de sécurisation

(30) Priorität: 17.07.2006 AT 12112006
(43) Veröffentlichungstag der Anmeldung: 23.01.2008
(73) Patentinhaber: Gealan Formteile GmbH, 95145 Oberkotzau (DE); Vaillant GmbH, 42859 Remscheid (DE)
(72) Erfinder: Braun, Thomas, 95234 Sparneck (DE); Saunus, Christian, 08223 Grünbach (DE); Migliorino, Giuseppe, 42855 Remscheid (DE); Schürmann, Bernd, 40489 Düsseldorf (DE)
(74) Vertreter: Hocker, Thomas

(56) Entgegenhaltungen:
- DE-A1- 10 346 712
- DE-A1- 19 603 506
- US-A1- 2002 070 549

## Beschreibung

Die Erfindung bezieht sich auf einen Aufnahmekörper mit einem Sicherungselement zur Fixierung eines Elements in einer Aufnahme, vorzugsweise einer Leitung in einem Durchlass des Aufnahmekörpers.

In der Heizungstechnik werden vorwiegend wasserführende Leitungen mittels Sicherungselementen in einem Aufnahmekörper fixiert, wobei das Sicherungselement nicht oder mittels einer gesonderten Sicherungsvorrichtung gesichert wird. Wird das Sicherungselement nicht gesichert, so kann es zu einer unbeabsichtigten Demontage kommen. Bei einer Sicherung wird zumeist das montierte Sicherungselement durch nachträgliches Befestigen der Sicherungsvorrichtung abgesichert. Zur Demontage des **Sicherungselementes** ist es dann meist notwendig, ein Werkzeug zu benutzen.

Aus DE 196 03 506 A1, auf dem Anspruch 1 basiert, ist eine Fixierung eines Elements in einer Aufnahme mittels Federn bekannt. Die Federn verhindern, dass ein Sicherungselement in der Position, in der keine Fixierung eines Elementes in einer Aufnahme mit Durchlass erfolgt, nicht aus dem Aufnahmekörper fallen kann; also unverlierbar ist. Die Federn sichern das Sicherungselement wenn das aufzunehmende Element frei ist.

Die DE 199 46 260 C1 zeigt eine Schnellkupplung, bei der Vorsprünge eines Verriegelungselements in Vertiefungen im Kupplungsgehäuse 1 einrasten. Zum Herausziehen des Verriegelungselements wird das Verriegelungselement selbst zusammengedrückt. Hierzu ist eine Kraftaufwendung in 2 Richtungen (Zusammendrücken Klammer, senkrecht dazu das Herausziehen) notwendig.

Die DE 10 2004 062 207 B3 zeigt eine rechteckige Öffnung zur Aufnahme eines Sicherungselements, welches nicht mehr zerstörungsfrei demontiert werden kann.

Die aus oben genanntem Stand der Technik bekannten Sicherungselemente stellen sicher, dass eine unbeabsichtigte Demontage verhindert wird. Dies ist jedoch in vielen Fällen nicht notwendig, da die Verbindungen an Stellen positioniert sind, die vor unbeabsichtigtem Eingriff geschützt sind. In diesen Fällen genügt eine Sicherung, die einfach gelöst werden kann. Eine Kraftaufwendung in zwei Richtungen, wie in der DE 199 46 260 C1 beschrieben, ist dann eher hinderlich.

Der Erfindung liegt die Aufgabe zugrunde, eine verriegelungs- und verrastungsfreie Fixierung eines Elements in einer Aufnahme, vorzugsweise einer Rohrleitung eines drucklosen und / oder druckgeführten Systems in einem Aufnahmekörper, in Ort und Lage zu sichern, wobei die Sicherungsvorrichtung einerseits unverlierbar und andererseits leicht anwendbar sein soll.

Erfindungsgemäß wird dies gemäß den Merkmalen des Anspruchs 1 dadurch erreicht, dass Federn als Sicherungsvorrichtung mit dem Aufnahmekörper einstückig verbunden sind, wobei die Federn das Sicherungselement formschlüssig arretieren. Die Federn befinden sich dabei im ungespannten Zustand im Verschiebeweg des Sicherungselementes.

Gemäß den Merkmalen des abhängigen Anspruchs 2 ergibt sich der Vorteil, dass die formschlüssige Arretierung reversibel überwunden werden kann, so dass das Sicherungselement wieder entfernt werden kann.

Gemäß den Merkmalen des abhängigen Anspruchs 3 wird das Sicherungselement sowohl in Öffnungen im Aufnahmekörper als auch davon entfernten Führungen aufgenommen, so dass Kräfte über das Sicherungselement auf den Aufnahmekörper übertragen werden können.

Die Erfindung wird nun anhand der Figuren detailliert erläutert. Hierbei zeigen
Figur 1 einen Aufnahmekörper mit erfindungsgemäßer Sicherungsvorrichtung, durch welche ein Rohr gesichert ist,
Figur 2 denselben Aufnahmekörper ohne das zu sichernde Rohr,
Figur 3 denselben Aufnahmekörper aus einer anderen Perspektive sowie
Figur 4 ein Detail hieraus.

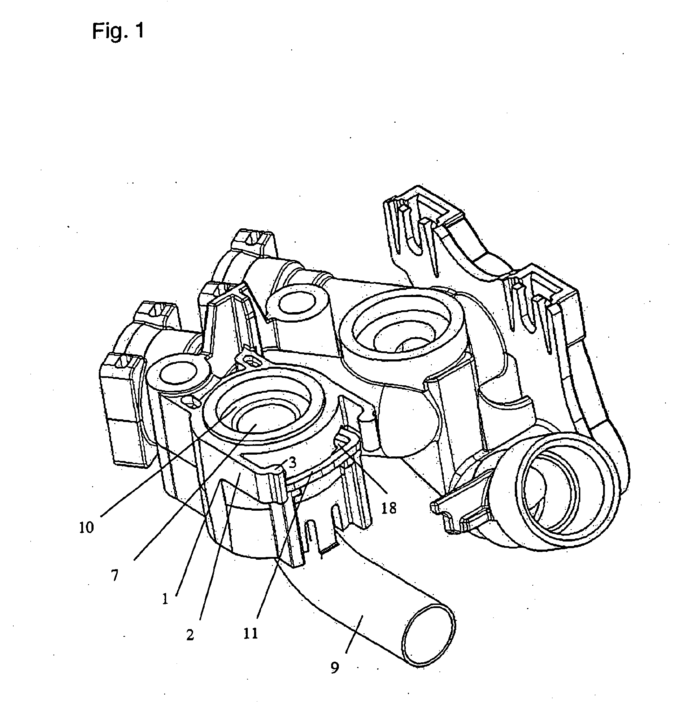

Figur 1 zeigt einen Aufnahmekörper 1, in welchem eine Leitung 9 befestigt ist. Die Leitung 9 verfügt über einen Ring 10 mit Nut zur Aufnahme eines Sicherungselements 11, hier in Form eines Drahtclips. Eine derartige Leitung 9 mit Ring 10 inklusive Nut zur Aufnahme des Sicherungselementes 11 ist prinzipiell aus der Patentanmeldung AT A 219/2006 bekannt.

Am Aufnahmekörper 1 befinden sich Federn 2 mit Anschlägen 3, wobei Aufnahmekörper 1, Federn 2 und Anschläge 3 ein einziges Bauteil bilden. Hierzu ist insbesondere ein Kunststoff-Spritzgussteil geeignet. Im Aufnahmekörper 1 befinden sich zylindrische Öffnungen 18, in denen das Sicherungselement 11 eingeschoben ist und somit den Ring 10 in axialer Lage sichert. Vor dem Sicherungselement 11 befinden sich partiell die Federn 2 mit den Anschlägen 3.

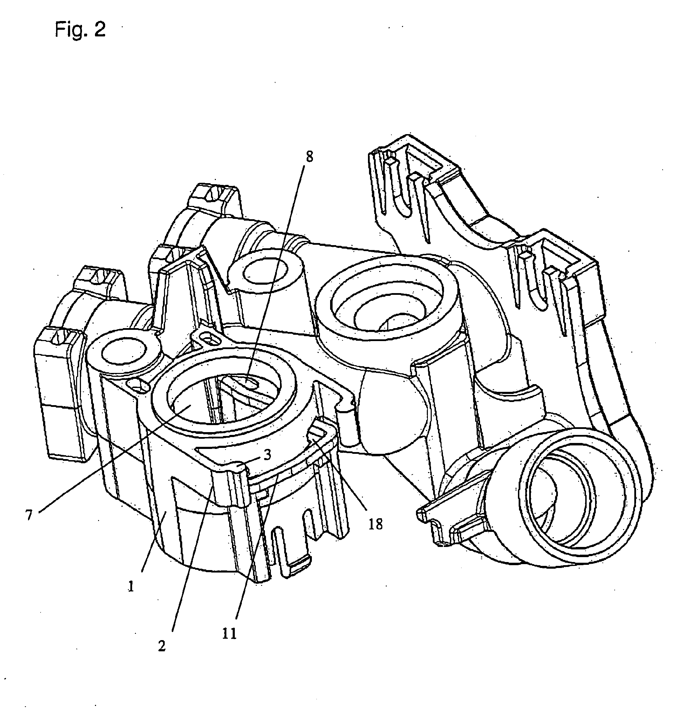

Figur 2 zeigt denselben Aufnahmekörper 1 ohne Leitung 9. Es ist zu erkennen, dass das Sicherungselement 11 sowohl in den zylindrischen Öffnungen 18 als auch in Führungen 8 gehalten ist. Zur Aufnahme der Leitung 9 dient ein Durchlass 7, der in diesem Fall eine runde Geometrie aufweist. Besonders in einem derartigen Fall ist es vorteilhaft, wenn die Führungen 8 sich axial auf der gleichen Linie erstrecken wie die zylindrischen Öffnungen 18 und sich hierbei bezüglich der zylindrischen Öffnungen 18 auf der anderen Seite des Durchlasses 7 befinden.

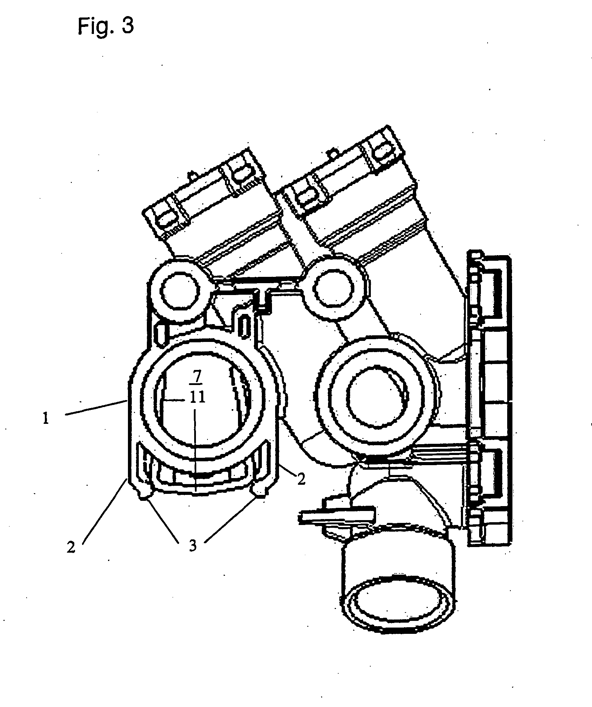

Figur 3 zeigt den Aufnahmekörper 1 ohne Leitung 9 von oben inklusive Sicherungselement 11.

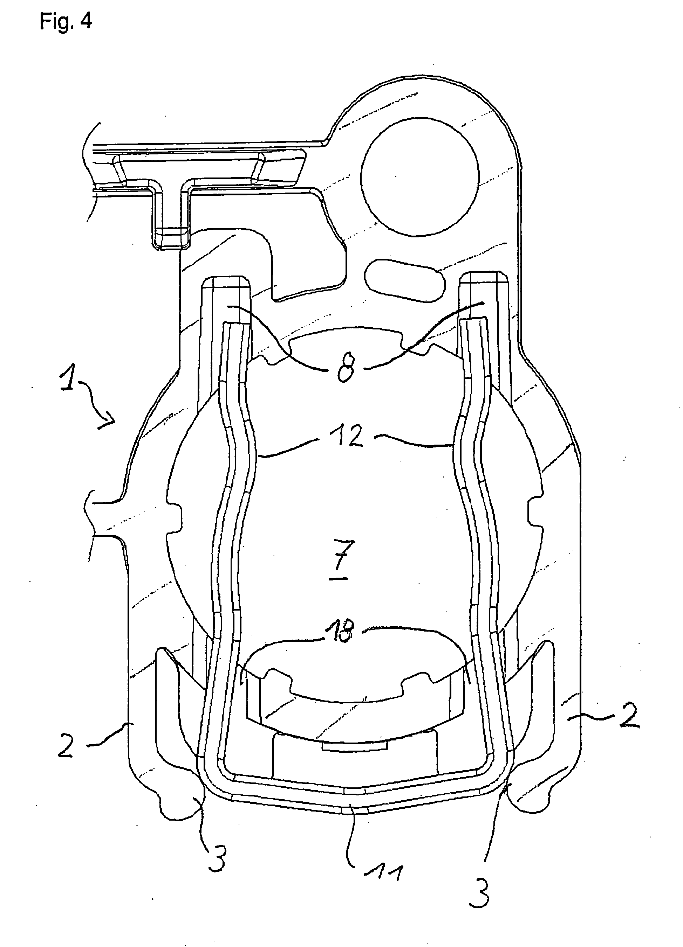

Figur 4 zeigt Ausschnittsweise hieraus den Durchlass 7 in dem Aufnahmekörper 1 im Schnitt. Es ist zu erkennen, dass das Sicherungselement 11 sowohl in den Öffnungen 18, als auch in den Führungen 8 aufgenommen wird. Auf der Seite der Öffnungen 18 außerhalb des Durchlasses 7 befinden sich die Federn 2 mit den abgerundeten Anschlägen 3. Die Anschläge 3 befinden sich partiell vor den Öffnungen 18, so dass das Sicherungselement 11 gegen Herausfallen gesichert ist. Das Sicherungselement 11 kann sich in dieser Position vom direkten Anliegen an das Material des Aufnahmekörpers 1 bis zu den Anschlägen 3 bewegen, wodurch sich ein Spiel S ergibt. Das Sicherungselement 11 verfügt über Einschnürungen 12, so dass beim Einschieben des Sicherungselementes 11 ein in dem Durchlass befindlicher Ring 10 hinter seiner dicksten Stelle eingeklammert wird.

Zur Montage der Leitung 9 wird diese mit ihrem Ring 10 in die Durchführung 7 bis zu einem Anschlag eingeschoben. Sodann wird das Sicherungselement 11 durch die Anschläge 3 der Feder 2 gedrückt, wodurch die Federn 2 elastisch nach außen gedrückt werden. Das Sicherungselement 11 greift in den Ring 10 der Leitung 9 ein. Das hintere Ende des Sicherungselementes 11 greift in die Führungen 8 ein. Sobald das gesamte Sicherungselement 11 die Anschläge 3 der Federn 2 passiert hat, federn die Federn 2 in ihre unbelastete Position zurück, wodurch die Anschläge 3 das Sicherungselement 11 arretiert.

Wird im Betrieb die Leitung 9 axial belastet, so werden die Aufnahmekräfte über den Ring 10 auf das Aufnahmeelement 11 und von diesem über die Auflageflächen in den zylindrischen Öffnungen 18, als auch den Führungen 8 auf den Aufnahmekörper 1 übertragen.

Soll die Leitung 9 demontiert werden, so wird das Sicherungselement 11 herausgezogen. Hierbei ist es notwendig, dass durch entsprechende Kraftaufwendung auf die abgerundeten Anschlägen 3 der Federn 2 diese nach außen gedrückt werden, so dass das Sicherungselement 11 die Arretierung überwinden kann. Durch die runde Form der Anschläge 3 wird beim Herausziehen des Sicherungselements 11 eine Kraft auf die Federn 2 ausgeübt, welche eine Öffnung der Federn 2 senkrecht zur Bewegungsrichtung des Sicherungselements 11 ermöglicht. Dies setzt jedoch voraus, dass die axiale Kraft zum Herausziehen des Sicherungselements 11 derartig groß ist, dass die notwendige Kraft zum ausreichenden Öffnen der Federn 2 überwunden wird. Sobald das Sicherungselement 11 den Ring 10 freigibt, kann die Leitung 9 herausgezogen werden.

Die erfindungsgemäße Arretierung von Sicherungselementen ist nicht nur auf die Fixierung von Leitungen in Aufnahmekörpern beschränkt, sondern kann auch für andere Fixierungen

Anwendung finden. So können beispielsweise Sensoren in einer Halterung gesichert werden.

Ferner können die Anschläge 3 auch über Ebenen, welche spitzwinklig zur Bewegungsrichtung des Sicherungselements 11 angeordnet sind verfügen. Relevant ist, dass durch eine Axialverschiebung des Sicherungselements 11 eine Kraft senkrecht zu dieser Axialverschiebung zum Öffnen der Federn 2 aufgebracht wird.

## Patentansprüche

1. Aufnahmekörper (1) mit einem Sicherungselement (11) zur Fixierung eines Elements in einer Aufnahme des Aufnahmekörpers (1) mit Durchlass (7), vorzugsweise einer Leitung (9) in diesem Durchlass (7), wobei das Sicherungselement (11) durch im wesentlichen zylindrische Öffnungen (18) in dem Aufnahmekörper (1) geführt wird, wobei mit dem Aufnahmekörper (1) einstückig Federn (2) außerhalb des Durchlasses (7) verbunden sind, die Federn (2) über Anschläge (3) verfügen, welche runde oder spitzwinklig zur Bewegungsrichtung des Sicherungselemente (11 angeordnete Berührflächen besitzen, **dadurch gekennzeichnet, dass** die Federn (2) das in den Öffnungen (18) eingeschobene Sicherungselement (11) bei fixiertem Element in der Aufnahme formschlüssig arretieren, indem sie im ungespannten Zustand in den durch die im wesentlichen zylindrischen Öffnungen (18) bestimmten Verschiebeweg des Sicherungselements (11) hineinragen, wobei das Sicherungselement (11) das Element im Aufnahmekörper (1) in axialer Lage sichert.

2. Aufnahmekörper (1) mit einem Sicherungselement (11) zur Fixierung eines Elements nach Anspruch 1, **dadurch gekennzeichnet, dass** die Federn (2) derart elastisch sind, dass die formschlüssige Arretierung durch Krafteinwirkung reversibel überwunden werden kann.

3. Aufnahmekörper (1) mit einem Sicherungselement (11) zur Fixierung eines Elements nach Anspruch 1 oder 2, **dadurch gekennzeichnet, dass** der Aufnahmekörper (1) über den Öffnungen (18) in axialer Richtung im Durchlass (7) gegenüberliegenden Führungen (8), welche das in die Öffnungen (18) eingeschobene Sicherungselement (11) führen, verfügen, das Sicherungselement (11) im arretierten Zustand über Spiel (S) verfügt und in jeder gesicherten Lage sowohl in den Öffnungen (18), als auch in den Führungen (8) anliegt.

## Claims

1. Receiving body (1) having a securing element (11) for fixing an element in a receiver of the receiving body (1) with a passage (7), preferably a line (9) in this passage (7), wherein the securing element (11) is guided by substantially cylindrical openings (18) in the receiving body (1), wherein springs (2) outside the passage (7) are connected integrally to the receiving body (1), said springs (2) possessing end stops (3) that possess interfaces that are round or are arranged at an acute angle to the movement direction of the securing element (11),
**characterised in that** the springs (2) arrest the securing element (11) introduced into the openings (18) positively when there is a fixed element in the receiver, while, in the unstressed state, they protrude into the displacement path of the security element (11) that is defined by the substantially cylindrical openings (18), wherein the element in the receiving body (1) secures in the axial position.

2. Receiving body (1) having a securing element (11) for fixing an element according to claim 1, **characterised in that** the springs (2) are so elastic that the positive arresting by force exertion can be overcome reversibly.

3. Receiving body (1) having a securing element (11) for fixing an element according to claim 1 or 2, **characterised in that** the receiving body (1) possesses guidance means (8) opposite the openings (18) in the axial direction in the passage (7), which guide the security element (11) introduced into the openings (18), the security element (11) possesses clearance (S) in the arrested state and, in each secured position, adjoins both the openings (18) and the guidance means (8).

## Revendications

1. Corps de logement (1) comprenant un élément de fixation (11) pour la fixation d'un élément dans un logement du corps de logement (1) avec un passage (7), de préférence d'une conduite (9) dans ce passage (7), dans lequel l'élément de fixation (11) est guidé dans le corps de logement (1) à travers des ouvertures essentiellement cylindriques (18), dans lequel des ressorts (2) sont reliés d'une pièce au corps de logement (1) en dehors du passage (7), les ressorts (2) disposent de butées (3) qui possèdent des surfaces de contact rondes ou disposées à un angle aigu par rapport au sens de mouvement de l'élément de fixation (11), **caractérisé en ce que** les ressorts (2) bloquent l'élément de fixation (11) inséré dans les ouvertures (18) par conjugaison de formes dans le logement en cas d'élément fixé **en ce qu'**ils avancent dans l'état détendu dans la course de coulissement de l'élément de fixation (11) déterminée par les ouvertures essentiellement cylindriques (18), dans lequel l'élément de fixation (11) fixe l'élément en position axiale dans le corps de logement (1).

2. Corps de logement (1) avec un élément de fixation (11) pour la fixation d'un élément selon la revendication 1, **caractérisé en ce que** les ressorts (2) sont élastiques de telle sorte que le blocage par conjugaison de formes peut être surmonté de manière réversible par l'action d'une force.

3. Corps de logement (1) avec un élément de fixation (11) pour la fixation d'un élément selon la revendication 1 ou 2, **caractérisé en ce que** le corps de logement (1) dispose de guides (8) opposés aux ouvertures (18) dans le sens axial dans le passage (7) qui guident l'élément de fixation (11) inséré dans les ouvertures (18), l'élément de fixation (11) dispose d'un jeu (S) dans l'état bloqué et repose dans chaque position fixée aussi bien dans les ouvertures (18) que dans les guides (8).
